# EUROPÄISCHE PATENTANMELDUNG

(11) **EP 1 054 499 A2**
(43) Veröffentlichungstag der Anmeldung: **22.11.2000**
(21) Anmeldenummer: 00106899.8
(22) Anmeldetag: 31.03.2000
(51) Int. Cl.: H02K 5/12, F02M 37/08

(54) **Für einen Einsatz in einem aggressiven Medium vorgesehener Elektromotor**

(30) Priorität: 20.05.1999 DE 19923201
(71) Anmelder: Mannesmann VDO Aktiengesellschaft, 60388 Frankfurt am Main (DE)
(72) Erfinder: Warnke, Wolfgang, 37293 Herleshausen 2 (DE)
(74) Vertreter: Klein, Thomas, Dipl.-Ing.

(57) **Zusammenfassung**

Bei einem von Kraftstoff durchströmten Elektromotor (1) hat ein Ankerblechpaket (8) eines Rotors (5) eine schlauchartige Umhüllung (14). Diese schlauchartige Umhüllung (14) ist aus einem kraftstoffesten Material gefertigt und schützt das Ankerblechpaket (8) vor Korrosion. Eine Unwucht in dem Rotor (5) durch die Schlauchform der Umhüllung (14) wird besonders gering gehalten.

## Beschreibung

Die Erfindung betrifft einen für einen Einsatz in einem aggressiven Medium vorgesehenen Elektromotor, insbesondere für eine Kraftstoffpumpe eines Kraftfahrzeuges mit einem sich innerhalb eines Stators drehenden Rotors, wobei der Rotor eine gegenüber dem vorgesehenen Medium korrosionsanfällige Mantelfläche hat.

Solche Elektromotoren werden zum Antrieb von Kraftstoffpumpen häufig eingesetzt und sind aus der Praxis bekannt. Der Elektromotor wird hierbei von dem Kraftstoff durchströmt. Hierdurch benötigt der Elektromotor keine aufwendige Abdichtung, so daß er sehr kostengünstig hergestellt werden kann. Der Rotor hat meist ein Ankerblechpaket aus einem weichmagnetischen und damit sehr korrosionsanfälligen Stahl. Insbesondere alkohol-, wasser-, oder säurehaltige Kraftstoffe führen daher zu einer Zerstörung des Rotors.

Man könnte daran denken, den Rotor vollständig mit korrosionsfestem Kunststoff zu umspritzen oder mit einer Folie zu umwickeln. Dies erhöht jedoch den Abstand des Rotors von dem Stator, so daß der Wirkungsgrad des Elektromotors sinkt. Weiterhin führt die Umspritzung des Rotors zu einer sehr großen Unwucht. Eine Umwicklung hat zwangsläufig Überlappungen, die ebenfalls zu einer Unwucht führen. Da der Rotor wegen der hohen Dichte des Ankerblechpakets vor dem Umspritzen oder dem Umwickeln mit Folie beispielsweise durch ein Ausfräsen ausgewuchtet werden muß, benötigt der umspritzte oder umwickelte Anker eine zweite Auswuchtung. Dies führt zu einer besonders kostenintensiven Fertigung des Rotors.

Weiterhin könnte man daran denken, den Rotor mit einem korrosionsfesten Lack zu überziehen. Solche Lacke benötigen jedoch hohe Temperaturen zum Aushärten. Die hohen Temperaturen können jedoch Bauteile des Rotors zerstören.

Der Erfindung liegt das Problem zugrunde, einen Elektromotor der eingangs genannten Art so zu gestalten, daß er besonders kostengünstig herstellbar ist und einen hohen Schutz für gegen Bauteile des Rotors aggressive Medien bietet.

Dieses Problem wird erfindungsgemäß dadurch gelöst, daß der Rotor eine schlauchartige, gegen das vorgesehene Medium resistente Umhüllung aufweist.

Durch diese Gestaltung benötigt der Schutz des Rotors vor Korrosion keine hohen Temperaturen, so daß eine Beschädigung des Rotors durch das Aufbringen der schlauchartigen Umhüllung ausgeschlossen ist. Da die Umhüllung durch ihre Schlauchform an jeder Stelle mit derselben Dicke versehen sein kann, wird der abgedrehte und ausgewuchtete Rotor durch das Aufbringen der schlauchartigen Umhüllung nicht in Unwucht versetzt. Durch eine geeignete Materialwahl der schlauchartigen Umhüllung hat die Mantelfläche des Rotors einen besonders zuverlässigen Korrosionsschutz. Da ein Aushärten oder Einbrennen des Korrosionsschutzes im Gegensatz zu dem Lack oder dem Umspritzen nicht erforderlich ist, gestaltet sich der erfindungsgemäße Elektromotor besonders kostengünstig.

Die Unwucht durch die schlauchartige Umhüllung läßt sich gemäß einer vorteilhaften Weiterbildung der Erfindung besonders gering halten, wenn die schlauchartige Umhüllung nahtlos ist.

Die Montage der schlauchartigen Umhüllung gestaltet sich gemäß einer anderen vorteilhaften Weiterbildung der Erfindung besonders einfach, wenn die schlauchartige Umhüllung elastisch gestaltet ist. Weiterhin ist die schlauchartige Umhüllung hierdurch zuverlässig mit dem Rotor verbunden. Ein Festkleben der schlauchartigen Umhüllung läßt sich daher vermeiden.

Besonders hohe Vorspannkräfte der schlauchartigen Umhüllung auf den Rotor lassen sich gemäß einer anderen vorteilhaften Weiterbildung der Erfindung einfach aufbringen, wenn die schlauchartige Umhüllung als ein durch Erwärmung sich plastisch zusammenziehender Schrumpfschlauch ausgebildet ist. Ein weiterer Vorteil dieser Gestaltung besteht darin, daß sich der Schrumpfschlauch durch einen geringen Überstand über die Mantelfläche an den Stirnseiten des Rotors fixieren läßt. Die schlauchartige Umhüllung ist damit besonders zuverlässig auf dem Rotor befestigt. Ein weiterer Vorteil dieser Gestaltung besteht zudem bei der Montage der schlauchartigen Umhüllung auf dem Rotor, da diese dank der Erfindung hierbei nicht gedehnt werden muß.

Zur weiteren Verringerung der Fertigungskosten für den erfindungsgemäßen Elektromotor trägt es bei, wenn die schlauchartige Umhüllung Polyester, PVC oder PTFE enthält.

Die an den Rotor angrenzenden Ränder der schlauchartigen Umhüllung könnten beispielsweise mit dem Rotor zur Abdichtung verklebt sein. Alternativ dazu könnte auch ein Spannring zur Abdichtung der schlauchartigen Umhüllung auf dem Rotor befestigt sein. Dies führt jedoch zu einer Erhöhung der Kosten für den Elektromotor und zudem zur Einleitung einer Unwucht in den Rotor. Die Abdichtung der schlauchartigen Umhüllung gestaltet sich jedoch gemäß einer anderen vorteilhaften Weiterbildung der Erfindung besonders einfach, wenn der Rotor in den angrenzenden Bereichen seiner Mantelfläche jeweils eine glatte, umlaufende Ringfläche aufweist und wenn die schlauchartige Umhüllung gegen die Ringflächen vorgespannt ist.

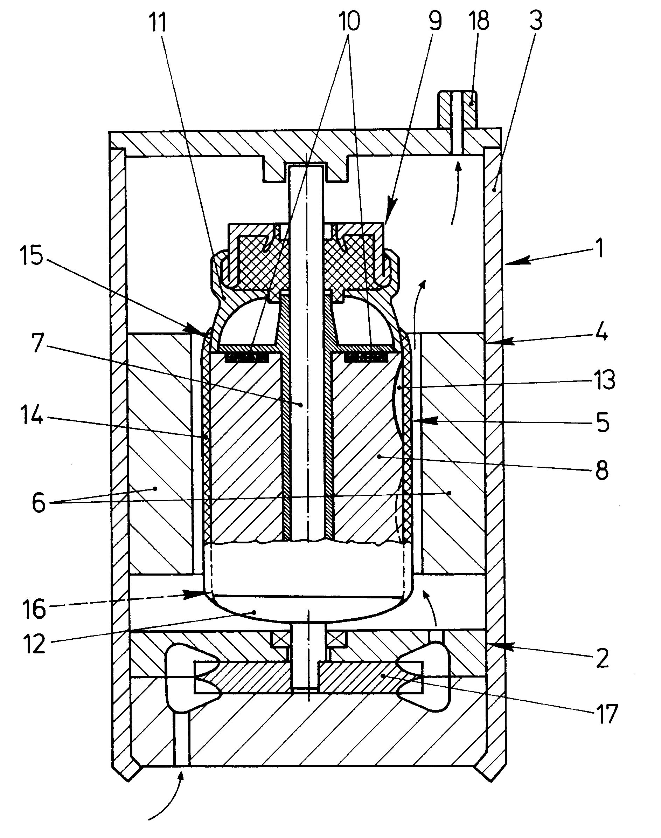

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in einer einzigen Figur schematisch einen erfindungsgemäßen Elektromotor 1 mit einer Förderpumpe 2.

Der Elektromotor 1 hat einen in einem Gehäuse 3 befestigten Stator 4 und einen darin drehbar gelagerten Rotor 5. An dem Gehäuse 3 sind Magnetschalen 6 des Stators 4 befestigt. Diese Magnetschalen 6 stehen einem drehfest auf einer Welle 7 angeordneten Ankerblechpaket 8 des Rotors 5 mit geringem Abstand gegenüber. Der Rotor 5 hat eine über einen Läufer 9 mit elektrischem Strom versorgte Spule 10. Zur Verdeutlichung des Aufbaus des Rotors 5 ist dieser im Teilschnitt dargestellt. Die Stirnseiten des Rotors 5 sind mit Kunststoff 11, 12 umspritzt. Weiterhin sind in dem Ankerblechpaket 8 beim Auswuchten durch Wegfräsen entstandene Ausnehmungen 13 vorhanden. Die Mantelfläche des Rotors 5 und damit der nicht von dem Kunststoff 11, 12 umspritzte Bereich des Ankerblechpakets 8 hat eine schlauchartige Umhüllung 14. Die schlauchartige Umhüllung 14 wird von einem sich bei Erwärmung zusammenziehenden Schrumpfschlauch aus PVC mit einer Wandstärke von 0,85 mm gebildet und ist damit spaltfrei gegen das Ankerblechpaket 8 vorgespannt. Die an das Ankerblechpaket 8 angrenzenden Bereiche des Kunststoffs 11, 12 sind sauber abgedreht und weisen damit jeweils eine glatte, umlaufende Ringfläche 15, 16 auf. An dieser Ringfläche 15, 16 liegt die schlauchartige Umhüllung 14 abdichtend an.

Auf der Welle 7 ist ein Laufrad 17 der Förderpumpe 2 drehfest angeordnet. Bei der Förderpumpe 2 kann es sich beispielsweise um eine Kraftstoffpumpe eines Kraftfahrzeuges handeln. Das von der Förderpumpe 2 geförderte Medium wird von außerhalb des Gehäuses 3 angesaugt und zwischen Stator 4 und Rotor 5 des Elektromotors 1 hindurch zu einem Anschlußstutzen 18 gefördert. Zur Verdeutlichung sind die Strömungen des Mediums mit Pfeilen gekennzeichnet. Die schlauchartige Umhüllung 14 schützt das aus Weicheisen gefertigte Ankerblechpaket 8 vor chemischen Einflüssen des zu fördernden Mediums.

## Patentansprüche

1. Für einen Einsatz in einem aggressiven Medium vorgesehener Elektromotor, insbesondere für eine Kraftstoffpumpe eines Kraftfahrzeuges mit einem sich innerhalb eines Stators drehenden Rotors, wobei der Rotor eine gegenüber dem vorgesehenen Medium korrosionsanfällige Mantelfläche hat, **dadurch gekennzeichnet**, daß der Rotor (5) eine schlauchartige, gegen das vorgesehene Medium resistente Umhüllung (14) aufweist.

2. Elektromotor nach Anspruch 1, **dadurch gekennzeichnet**, daß die schlauchartige Umhüllung (14) nahtlos ist.

3. Elektromotor nach Anspruch 1 oder 2, **dadurch gekennzeichnet**, daß die schlauchartige Umhüllung (14) elastisch gestaltet ist.

4. Elektromotor nach zumindest einem der vorhergehenden Ansprüche, **dadurch gekennzeichnet**, daß die schlauchartige Umhüllung (14) als ein durch Erwärmung sich plastisch zusammenziehender Schrumpfschlauch ausgebildet ist.

5. Elektromotor nach zumindest einem der vorhergehenden Ansprüche, **dadurch gekennzeichnet**, daß die schlauchartige Umhüllung (14) Polyester, PVC oder PTFE enthält.

6. Elektromotor nach Anspruch 5, **dadurch gekennzeichnet**, daß die schlauchartige Umhüllung (14) eine Wanddicke von 0,2 mm bis 1 mm, vorzugsweise von 0,85 mm besitzt.

7. Elektromotor nach zumindest einem der vorhergehenden Ansprüche, **dadurch gekennzeichnet**, daß der Rotor (5) in den angrenzenden Bereichen seiner Mantelfläche jeweils eine glatte, umlaufende Ringfläche (15, 16) aufweist und daß die schlauchartige Umhüllung (14) gegen die Ringflächen (15, 16) vorgespannt ist.
